(19) Europäisches Patentamt / European Patent Office / Office européen des brevets

(11) **EP 3 085 741 B1**

(12) **EUROPEAN PATENT SPECIFICATION**

(45) Date of publication and mention
of the grant of the patent:
**03.10.2018 Bulletin 2018/40**

(51) Int Cl.:
*C08L 101/00* *(2006.01)*   *B32B 15/08* *(2006.01)*
*C08K 3/00* *(2018.01)*   *C08L 9/02* *(2006.01)*
*C08L 31/04* *(2006.01)*   *C08L 61/06* *(2006.01)*

(21) Application number: **14872345.5**

(22) Date of filing: **28.11.2014**

(86) International application number:
**PCT/JP2014/081626**

(87) International publication number:
**WO 2015/093260 (25.06.2015 Gazette 2015/25)**

(54) **THERMOSETTING RESIN COMPOSITION AND METAL-RESIN COMPOSITE**

WÄRMEHÄRTENDE HARZZUSAMMENSETZUNG UND METALL-HARZ-VERBUNDSTOFF

COMPOSITION DE RÉSINE THERMODURCISSABLE ET COMPOSITE MÉTAL-RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2013 JP 2013263536**

(43) Date of publication of application:
**26.10.2016 Bulletin 2016/43**

(73) Proprietor: **Sumitomo Bakelite Company Limited
Shinagawa-ku
Tokyo 140-0002 (JP)**

(72) Inventors:
• **TAKIHANA Yoshihiro**
**Tokyo 140-0002 (JP)**
• **KOIZUMI Koji**
**Tokyo 140-0002 (JP)**
• **WATANABE Yusuke**
**Tokyo 140-0002 (JP)**

(74) Representative: **Ter Meer Steinmeister & Partner
Patentanwälte mbB
Nymphenburger Straße 4
80335 München (DE)**

(56) References cited:
EP-A1- 2 910 372   WO-A1-2005/040276
WO-A1-2011/052127   WO-A1-2011/071102
JP-A- H0 912 840   JP-A- H0 912 840
JP-A- 2000 044 771   JP-A- 2000 063 621
JP-A- 2010 274 600   JP-A- 2011 098 541

**Description**

TECHNICAL FIELD

The present invention relates to a thermosetting resin composition and a metal-resin composite body.

BACKGROUND ART

A technique for bonding a resin member and a metal member together is required in various fields such as aircrafts, automobiles, home appliances, and industrial machines.

As a method for bonding a resin member and a metal member together, a method has been suggested in which fine irregularities are formed on the surface of the metal member, a thermosetting resin composition is caused to permeate the fine irregularities, and then the thermosetting resin composition is cured such that a resin member composed of the thermosetting resin composition and the metal member are bonded together (for example, Patent Documents 1 and 2).

RELATED DOCUMENT

PATENT DOCUMENT

[Patent Document 1] Japanese Unexamined Patent Publication No. 2010-274600
[Patent Document 2] Japanese Unexamined Patent Publication No. 2012-116126
[Patent Document 3] EP2910372A1 discloses a metal-resin composite but does not include a contraction inhibitor in the resin composition.
[Patent Document 4] JP H0912840A discloses a resin composition with improved warpage.

SUMMARY OF THE INVENTION

A metal-resin composite body obtained by bonding a resin member and an aluminum-based metal member together is used in parts of various products. The products using such parts can be used over a long period of time in atmospheres at various temperatures.

According to the examination conducted by the inventors of the present invention, it has become evident that when a metal-resin composite body, in which a bond strength between the resin member and the aluminum-based metal member is enhanced above the conventional level, is exposed to a high temperature for a long period of time, the composite body undergoes dimensional change in some cases. Due to the dimensional change, a product in which the metal-resin composite body is used in a part thereof has problems such as the occurrence of voids.

The present invention has been made in consideration of the above circumstances, and an object thereof is to provide a thermosetting resin composition, which can realize a metal-resin composite body exhibiting excellent dimensional stability at a high temperature, and a metal-resin composite body which exhibits excellent dimensional stability at a high temperature.

According to the examination conducted by the inventors of the present invention, it has become evident that when a metal-resin composite body, in which a bond strength between the resin member and the aluminum-based metal member is enhanced, is exposed to a high temperature for a long period of time, the resin member side undergoes thermal contraction, and thus the dimensions of the metal-resin composite body change due to the thermal contraction stress. Furthermore, it has become evident that in a case where the bond strength between the resin member and the aluminum-based metal member is high, peeling does not occur between the resin member and the aluminum-based metal member even if the resin member side undergoes thermal contraction, and hence the aluminum-based metal member side is deformed as well.

Based on the above findings, in order to inhibit the dimensional change of the metal-resin composite body at a high temperature, the inventors of the present invention examined improving a modulus of elasticity or a mechanical strength of the resin member, controlling a difference of a coefficient of linear expansion between the resin member and the metal member, or the like.

However, simply by improving a modulus of elasticity or a mechanical strength of the resin member or controlling a difference of a coefficient of linear expansion between the resin member and the metal member, dimensional changes of the metal-resin composite body at a high temperature could not be sufficiently inhibited.

Therefore, the inventors of the present invention further conducted intensive examination regarding a design guideline for realizing a metal-resin composite body exhibiting excellent dimensional stability at a high temperature. As a result, the inventors found that a rate of change of warpage of a thermosetting resin composition that is a measure devised by the inventors is effective as the design guideline, and accomplished the present invention.

That is, according to the present invention, there is provided a thermosetting resin composition according to claim 1.

In addition, according to the present invention, there is provided a metal-resin composite body including a resin member composed of the thermosetting resin composition and an aluminum-based metal member bonded to the resin member.

According to the present invention, it is possible to provide a thermosetting resin composition which can realize a metal-resin composite body exhibiting excellent dimensional stability at a high temperature, and to provide a metal-resin composite body exhibiting excellent dimensional stability at a high temperature.

BRIEF DESCRIPTION OF THE DRAWINGS

The aforementioned object and other objects, characteristics, and advantages are further clarified by the preferred embodiments described below and the accompanying drawings below.

FIG. 1 is a sectional view showing an example of the structure of a metal-resin composite body according to an embodiment of the present invention.

FIG. 2 is a schematic view for illustrating a rate of change of warpage according to an embodiment of the present invention.

FIG. 3 is a schematic view for illustrating an example of sectional shapes of depression portions constituting a roughened layer on the surface of an aluminum-based metal member according to an embodiment of the present invention.

FIG. 4 is a sectional view schematically showing an example of a device for manufacturing a metal-resin composite body according to an embodiment of the present invention.

FIG. 5 is an electron micrograph showing an enlarged view of a roughened layer present on the surface of an aluminum alloy sheet obtained in Example 1.

DESCRIPTION OF EMBODIMENTS

Hereinafter, embodiments of the present invention will be described using drawings. In all of the drawings, the same constituents are marked with the same reference numerals so as not to repeat the description thereof. Furthermore, unless otherwise specified, a range of numerical values described using "to" is a range in which the numerical values listed before and after "to" are the upper limit and the lower limit respectively.

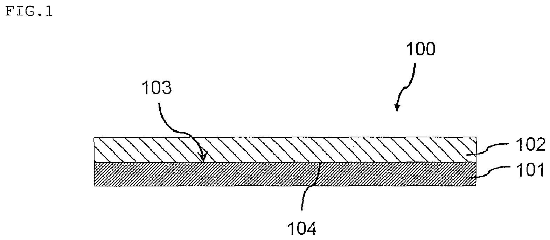

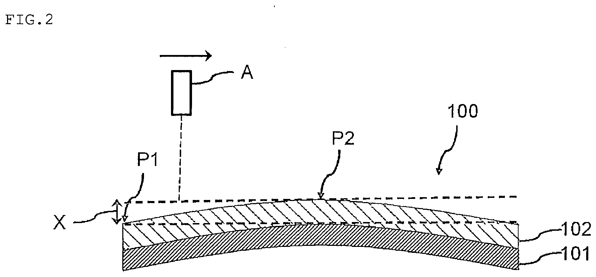

FIG. 1 is a sectional view showing an example of the structure of a metal-resin composite body 100 according to an embodiment of the present invention. FIG. 2 is a schematic view for illustrating a rate of change of warpage according to an embodiment of the present invention.

The metal-resin composite body 100 includes a resin member 101, and an aluminum-based metal member 102 bonded to the resin member 101. The resin member 101 is formed of a thermosetting resin composition (P). The thermosetting resin composition (P) contains a thermosetting resin (A) and a filler (B). In the thermosetting resin composition (P), a rate of change of warpage calculated by the following (1) to (4) is equal to or greater than -35% and equal to or less than 35%.

(1) By using a molding machine, the thermosetting resin composition (P) is injection-molded in a mold, in which an aluminum alloy sheet having a thickness of 1 mm and a maximum height (Rz) of $15 \pm 1$ $\mu$m is disposed, under the conditions of an effective pressure of 20 MPa, a mold temperature of 175°C, and a curing time of 3 minutes, thereby preparing a sheet-like metal-resin composite body having a length of 80 mm, a width of 10 mm, and a thickness of 4 mm. Herein, Rz is measured based on JIS-B0601, and the resin member has a thickness of 3 mm.

(2) The obtained sheet-like metal-resin composite body is stored for 250 hours at 150°C.

(3) When the sheet-like metal-resin composite body is measured using a temperature-variable three-dimensional laser measurement instrument by vertically applying a laser to the surface on the aluminum alloy sheet side of the sheet-like metal-resin composite body, a difference between a farthest point P1 farthest away from a laser head A and a closest point P2 closest to the laser head A is defined as a warpage amount X, the warpage amount before the storage is denoted by X1, and the warpage amount after the storage is denoted by X2.

(4) A rate of change of warpage is calculated by the following equation.

$$\text{Rate of change of warpage [\%]} = (X2 - X1)/X1 \times 100$$

Herein, in the sheet-like metal-resin composite body after the storage, the resin member composed of the thermosetting resin composition (P) and the aluminum alloy sheet remain bonded to each other.

By controlling the rate of change of warpage to be within the above range, even in a case where the metal-resin composite body 100 is used for a long period of time in a high-temperature environment, it is possible to inhibit the dimensional change of the metal-resin composite body 100. As a result, it is possible to improve the stability of products, which are obtained using the metal-resin composite body 100, at the time of use or storage in a high-temperature environment. In the present embodiment, from the viewpoint of more effectively improving the stability of the obtained products at the time of use or storage in a high-temperature environment, the rate of change of warpage is more preferably equal to or greater than -30% and equal to or less than 30%, and particularly preferably equal to or greater than -25% and equal to or less than 25%.

The warpage amount X1 before the storage is not particularly limited. However, X1 is preferably equal to or greater than 0.1 mm, more preferably equal to or greater than 0.01 mm, and particularly preferably equal to or greater than 0.00 mm. Furthermore, X1 is preferably equal to or less than 1.00 mm, and more preferably equal to or less than 0.50 mm.

The warpage amount X2 after the storage is not particularly limited. However, X2 is preferably equal to or greater than 0.1 mm, more preferably equal to or greater than 0.01 mm, and particularly preferably equal to or greater than 0.00 mm. Furthermore, X2 is preferably equal to or less than 1.35 mm, and more preferably equal to or less than 0.65 mm.

Through examination, the inventors of the present invention found that by providing a specific roughened layer, which will be described later, on the surface of the aluminum-based metal member, the bond strength between the metal member and the resin member can be improved the above the conventional level.

However, it has become evident that when the metal-resin composite body having such an excellent bond strength is exposed to a high temperature for a long period of time, the resin member side undergoes thermal contraction, and thus the dimension of the metal-resin composite body changes due to the thermal contraction stress. In addition, it has become evident that in a case where the bond strength between the resin member and the aluminum-based metal member is high, peeling does not occur between the resin member and the aluminum-based metal member even if the resin member side undergoes thermal contraction, and hence the aluminum-based metal member side is deformed as well.

Based on the above findings, in order to inhibit the dimensional change of the metal-resin composite body at a high temperature, the inventors of the present invention examined improving a modulus of elasticity or a mechanical strength of the resin member.

However, simply by improving a modulus of elasticity or a mechanical strength of the resin member, the dimensional change of the metal-resin composite body at a high temperature could not be sufficiently inhibited.

Therefore, the inventors of the present invention further conducted intensive examination regarding a design guideline for realizing a metal-resin composite body exhibiting excellent dimensional stability at a high temperature. As a result, the inventors found that a rate of change of warpage of a thermosetting resin composition that is a measure devised by the inventors is effective as the design guideline, and accomplished the present invention.

Herein, the rate of change of warpage represents an index of expansion and contraction stress of the thermosetting resin composition. The positive increase in the rate of change of warpage means that the contraction stress is high, and the force deforming the aluminum-based metal member is stronger. In contrast, the negative increase in the rate of change of warpage means that the expansion stress is high.

Therefore, an appropriate expansion and contraction stress is applied to the thermosetting resin composition in which the rate of change of warpage is within the range described above, and the thermosetting resin composition is less capable of deforming the aluminum-based metal member. Consequently, the thermosetting resin composition in which the rate of change of warpage is within the range described above can realize a metal-resin composite body exhibiting excellent dimensional stability at a high temperature.

The rate of change of warpage of the thermosetting resin composition can be controlled by appropriately regulating the type or formulation ratio of the respective components constituting the thermosetting resin composition (P). In the present embodiment, particularly by appropriately selecting the type or formulation ratio of the thermosetting resin (A), the filler (B), and a contraction inhibitor (C), the rate of change of warpage can be adjusted.

Hereinafter, the constitution of the metal-resin composite body 100 will be specifically described.

<Aluminum-based metal member 102>

Hereinafter, the aluminum-based metal member 102 will be described.

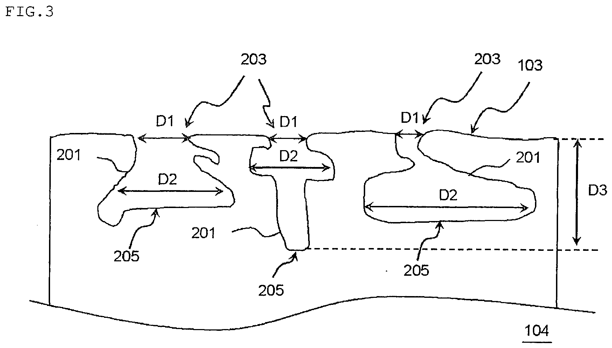

FIG. 3 is a schematic view for illustrating an example of sectional shapes of depression portions 201 constituting a roughened layer 104 on the surface of the aluminum-based metal member 102 according to an embodiment of the present invention.

From the viewpoint of improving the bond strength between the aluminum-based metal member 102 and the resin member 101, it is preferable that the aluminum-based metal member 102 has the roughened layer 104 including fine irregularities on a bonding surface 103 thereof. Herein, the roughened layer 104 refers to a region which is on the surface of the aluminum-based metal member 102 and has a plurality of depression portions 201.

The thickness of the roughened layer 104 is preferably equal to or greater than 3 $\mu$m to equal to or less than 40 $\mu$m, more preferably equal to or greater than 4 $\mu$m and equal to or less than 32 $\mu$m, and particularly preferably equal to or greater than 4 $\mu$m and equal to or less than 30 $\mu$m. When the thickness of the roughened layer 104 is within the above range, the bond strength between the aluminum-based metal member 102 and the resin member 101 can be further improved. In the present embodiment, the thickness of the roughened layer 104 refers to a depth D3 of a depression portion having the greatest depth among a plurality of depression portions 201, and can be calculated from an image of an electron microscope (SEM).

It is preferable that each depression portion 201 has such a sectional shape that, between an opening portion 203 and a bottom portion 205 of the depression portion 201, there is at least a portion whose section width D2 is greater than a section width D1 of the opening portion 203.

As shown in FIG. 3, the sectional shape of the depression portion 201 is not particularly limited as long as D2 is greater than D1, and various shapes can be adopted. The sectional shape of the depression portion 201 can be observed with, for example, an electron microscope (SEM).

It is unclear why the metal-resin composite body 100 in which the bond strength is further improved is obtained when the depression portion 201 has the aforementioned sectional shape. However, presumably, that is because the bonding surface 103 has a surface structure by which the anchor effect between the resin member 101 and the aluminum-based metal member 102 can be more strongly exhibited.

When the depression portion 201 has the aforementioned sectional shape, the resin member 101 is entangled in the depression portion 201 throughout the opening portion 203 and the bottom portion 205, and thus the anchor effect is effectively exerted. It is considered that, for this reason, the bond strength between the resin member 101 and the aluminum-based metal member 102 is improved.

The average depth of the depression portion 201 is preferably equal to or greater than 0.5 $\mu$m and equal to or less than 40 pm, and more preferably equal to or greater than 1 $\mu$m and equal to or less than 30 $\mu$m. When the average depth of the depression portion 201 is equal to or less than the upper limit described above, the thermosetting resin composition (P) can sufficiently permeate deep into the depression portion 201, and hence the mechanical strength of the region in which the resin member 101 and the aluminum-based metal member 102 permeate to each other can be further improved. When the average depth of the depression portion 201 is equal to or greater than the lower limit described above, the ratio of the filler (B) present in the depression portion 201 can be increased, and hence the mechanical strength of the region in which the resin member 101 and the aluminum-based metal member 102 permeate to each other can be further improved. Consequently, when the average depth of the depression portion 201 is within the above range, the bond strength between the metal member and the resin member 101 can be further improved.

The average depth of the depression portion 201 can be measured using an image of a scanning electron microscope (SEM) as below, for example. First, the section of the roughened layer 104 is imaged by a scanning electron microscope. From the image observed, 50 depression portions 201 are randomly selected, and the depth of each of them is measured. Then, all of the depths of the depression portions 201 are added up and divided by 50, thereby obtaining the average depth.

The average section width of the opening portion 203 of the depression portion 201 is preferably equal to or greater than 2 $\mu$m and equal to or less than 60 $\mu$m, more preferably equal to or greater than 3 $\mu$m and equal to or less than 50 $\mu$m, and even more preferably equal to or greater than 3 $\mu$m and equal to or less than 30 $\mu$m. When the average section width of the opening portion 203 is equal to or less than the upper limit described above, the anchor effect between the resin member 101 and the aluminum-based metal member 102 can be more strongly exhibited. When the average section width of the opening portion 203 is equal to or greater than the lower limit described above, the ratio of the filler (B) present in the depression portion 201 can be increased, and hence the mechanical strength of the region in which the resin member 101 and the aluminum-based metal member 102 permeate to each other can be improved. Therefore, when the average section width of the opening portion 203 is within the above range, the bond strength between the metal member and the resin member 101 can be further improved.

The average section width of the opening portion 203 can be measured using an SEM image as below, for example. First, the section of the roughened layer 104 is imaged by a scanning electron microscope . From the image observed, 50 depression portions 201 are randomly selected, and the section width D1 of each of them is measured. Then, all of the section widths D1 of the opening portions 203 are added up and divided by 50, thereby obtaining the average section width.

The surface roughness Ra of the bonding surface 103 of the aluminum-based metal member 102 is preferably equal to or greater than 0.5 $\mu$m and equal to or less than 40.0 $\mu$m, more preferably equal to or greater than 1.0 $\mu$m and equal to or less than 20.0 $\mu$m, and particularly preferably equal to or greater than 1.0 $\mu$m and equal to or less than 10.0 $\mu$m. When the surface roughness Ra is within the above range, the bond strength between the metal member and the resin member 101 can be further improved.

The maximum height Rz of the bonding surface 103 of the aluminum-based metal member 102 is preferably equal to or greater than 1.0 $\mu$m and equal to or less than 40.0 $\mu$m, and more preferably equal to or greater than 3.0 $\mu$m and equal to or less than 30.0 $\mu$m. When the maximum height Rz is within the above range, the bond strength between the metal member and the resin member 101 can be further improved. Herein, Ra and Rz can be measured based on JIS-B0601.

In the aluminum-based metal member 102, the ratio of an actual surface area, which is measured by a nitrogen adsorption BET method, to an apparent surface area of at least the bonding surface 103 bonded to the resin member 101 (hereinafter, simply referred to as a specific surface area as well) is preferably equal to or greater than 100, and more preferably equal to or greater than 150. When the specific surface area is equal to or greater than the lower limit described above, the bond strength between the metal member and the resin member 101 can be further improved. The specific surface area is preferably equal to or less than 400, more preferably equal to or less than 380, and particularly preferably equal to or less than 300. When the specific surface area is equal to or less than the upper limit described above, the bond strength between the metal member and the resin member 101 can be further improved.

In the present embodiment, the apparent surface area means a surface area determined on the assumption that the surface of the aluminum-based metal member 102 has a smooth surface shape free of irregularities. For example, in a case where the surface shape is rectangular, the apparent surface area is represented by width x length. In contrast, in the present embodiment, the actual surface area determined by a nitrogen adsorption BET method means a BET surface area determined by an adsorption amount of nitrogen gas. For example, for a vacuum-dried sample for measurement, an adsorption and desorption amount of nitrogen at the temperature of liquid nitrogen is measured using an automatic specific surface area/pore distribution analyzer (BELSORPmini II manufactured by BEL Japan, Inc.), and based on the adsorption and desorption amount of nitrogen, the actual surface area can be calculated.

It is unclear why the metal-resin composite body 100 in which the bond strength is further improved is obtained when the specific surface area is within the above range. However, presumably, that is because the bonding surface 103 bonded to the resin member 101 has a surface structure by which the anchor effect between the resin member 101 and the aluminum-based metal member 102 can be more strongly exhibited.

When the specific surface area is equal to or greater than the lower limit described above, the contact area between the resin member 101 and the aluminum-based metal member 102 is enlarged, and thus the number of regions in which the resin member 101 and the aluminum-based metal member 102 permeate to each other is increased. It is considered that, as a result, the number of regions in which the anchor effect is exerted is increased, and hence the bond strength between the resin member 101 and the aluminum-based metal member 102 is further improved.

In contrast, when the specific surface area is too large, in the region in which the resin member 101 and the aluminum-based metal member 102 permeate to each other, the ratio of the aluminum-based metal member 102 is reduced, and hence the mechanical strength of the region is decreased. Accordingly, it is considered that when the specific surface area is equal to or less than the upper limit described above, the mechanical strength of the region in which the resin member 101 and the aluminum-based metal member 102 permeate to each other is further improved, and hence the bond strength between the resin member 101 and the aluminum-based metal member 102 can be further improved.

For the above reasons, it is assumed that, when the specific surface area is within the above range, the bonding surface 103 bonded to the resin member 101 has an excellently balanced surface structure by which the anchor effect between the resin member 101 and the aluminum-based metal member 102 is more strongly exhibited.

The aluminum-based metal member 102 is not particularly limited. However, a degree of glossiness of at least the bonding surface 103 to be bonded to the resin member 101 is preferably equal to or greater than 0.1, more preferably equal to or greater than 0.5, and even more preferably equal to or greater than 1. When the degree of glossiness is equal to or greater than the lower limit described above, the bond strength between the metal member and the resin member 101 can be further improved. The degree of glossiness is preferably equal to or less than 30, and more preferably equal to or less than 20. When the degree of glossiness is equal to or less than the upper limit described above, the bond strength between the metal member and the resin member 101 can be further improved. In the present embodiment, the degree of glossiness refers to a value measured based on ASTM-D523 at a measurement angle of 60°. The degree of glossiness can be measured using a digital gloss meter (20°, 60°) (GM-26 model, manufactured by MURAKAMI COLOR RESEARCH LABORATORY CO., Ltd.), for example.

It is unclear why the metal-resin composite body 100 in which the bond strength is further improved is obtained when the degree of glossiness is within the above range. However, presumably, that is because the bonding surface 103 bonded to the resin member 101 has a more complicated surface structure by which the anchor effect between the resin member 101 and the aluminum-based metal member 102 can be more strongly exhibited.

The aluminum-based metal material constituting the aluminum-based metal member 102 is not particularly limited as long as it is a metal that belongs to a category of aluminum-based metals. For example, from the viewpoint of ease of availability or price, aluminum, an aluminum alloy, and the like can be used.

The aluminum alloy is an alloy which consists of aluminum and one kind of metal or two or more kinds of metal selected from copper, manganese, silicon, magnesium, zinc, and nickel and contains aluminum as a main component.

Examples of the aluminum alloy include an A1000 series, an A2000 series, an A3000 series, an A5000 series, an A6000 series, an A7000 series, an A8000 series, and the like specified by Japanese Industrial Standards (JIS).

The shape of the aluminum-based metal member 102 is not particularly limited as long as it has the bonding surface 103 to be bonded to the resin member 101. For example, the aluminum-based metal member 102 can have a sheet shape, a flat plate shape, a curved plate shape, a rod shape, a cylindrical shape, a lump shape, and the like. Furthermore, the aluminum-based metal member 102 may be a structure having these shapes in combination. The aluminum-based metal member 102 having the above shape can be obtained by processing the aforementioned aluminum-based metal material by a known processing method.

The shape of the bonding surface 103 to be bonded to the resin member 101 is not particularly limited, and examples thereof include a flat surface, a curved surface, and the like.

The thickness of the aluminum-based metal member 102 is not particularly limited because it is appropriately set according to the use of the metal-resin composite body 100. However, the thickness is generally equal to or greater than 0.01 mm, and preferably equal to or greater than 0.1 mm. The upper limit of the thickness of the aluminum-based metal member 102 is not particularly limited, but is equal to or less than 50 mm, for example.

Next, the method for forming the roughened layer 104 on the surface of the aluminum-based metal member 102 will be described.

The roughened layer 104 can be formed by chemically treating the surface of the aluminum-based metal member 102 by using a surface treatment agent, for example.

The process of chemically treating the surface of the aluminum-based metal member 102 by using a surface treatment agent has also been carried out in the related art. However, the inventors of the present invention found that by highly controlling factors such as (1) the combination of the aluminum-based metal member and the surface treatment agent, (2) the temperature and time of the chemical treatment, and (3) the post-treatment for the surface of the aluminum-based metal member having undergone the chemical treatment, the roughened layer 104 exhibiting excellent bonding properties with respect to the resin member 101 can be obtained. In order to obtain the roughened layer 104 that can further improve the bond strength between the metal member and the resin member 101, it is particularly important to highly control these factors.

An example of the method for forming the roughened layer 104 on the surface of the aluminum-based metal member 102 will be described below, but the method for forming the roughened layer 104 according to the present embodiment is not limited to the following example.

First, (1) the surface treatment agent is selected.

As the surface treatment, it is preferable to select an aqueous solution obtained by combining an alkali source, an amphoteric metal ion source, a nitrate ion source, and a thio compound as necessary.

Then, (2) the aluminum-based metal member is dipped into the surface treatment agent such that the surface of the aluminum-based metal member is chemically treated. At this time, the treatment temperature is 30°C, for example. The treatment time is appropriately determined according to the material or surface condition of the selected aluminum-based metal member, the type or concentration of the surface treatment agent, the treatment temperature, and the like. The treatment time is, for example, 30 seconds to 300 seconds. At this time, it is important that an etching amount in the depth direction of the aluminum-based metal member is preferably set to be equal to or greater than 3 $\mu$m and more preferably set to be equal to or greater than 5 $\mu$m. The etching amount in the depth direction of the aluminum-based metal member can be evaluated by being calculated from the weight, specific gravity, and surface area of the dissolved aluminum-based metal member. The etching amount in the depth direction can be adjusted by the type or concentration of the surface treatment agent, the treatment temperature, the treatment time, and the like.

In the present embodiment, by adjusting the etching amount in the depth direction, the thickness of the roughened layer 104, the average depth of the depression portion 201, the specific surface area, the degree of glossiness, Ra, Rz, and the like described above can be adjusted.

Finally, (3) the surface of the aluminum-based metal member having undergone the chemical treatment is subjected to a post-treatment. First, the surface of the aluminum-based metal member is washed with water and dried. Then, the surface of the aluminum-based metal member having undergone the chemical treatment is treated with an aqueous nitric acid solution or the like.

By the above procedure, the aluminum-based metal member 102 having the roughened layer 104 according to the present embodiment can be obtained.

<Resin member>

Next, the resin member 101 according to the present embodiment will be described.

The resin member 101 is obtained by curing the thermosetting resin composition (P) containing the thermosetting resin (A) and the filler (B).

(Thermosetting resin composition (p))

Next, the thermosetting resin composition (P) will be described.

The thermosetting resin composition (P) has a powder shape, a grain shape, or a tablet shape, for example.

As the thermosetting resin (A), for example, a phenol resin, an epoxy resin, an unsaturated polyester resin, a diallyl phthalate resin, a melamine resin, an oxetane resin, a maleimide resin, an urea resin, a polyurethane resin, a silicone resin, a resin having an benzoxazine ring, or a cyanate ester resin is used. One kind of these may be used singly, or two or more kinds thereof may be used in combination.

Among these, a phenol resin excellent in heat resistance, processability, mechanical characteristics, electric characteristics, adhesiveness, and abrasion resistance is preferably used.

When the total solid content of the thermosetting resin composition (P) is 100% by mass, the content of the thermosetting resin (A) is preferably equal to or greater than 15% by mass and equal to or less than 55% by mass, more preferably equal to or greater than 20% by mass and equal to or less than 50% by mass, and even more preferably equal to or greater than 22% by mass and less than 30% by mass.

Examples of the phenol resin include a novolac-type phenol resin such as a phenol novolac resin, a cresol novolac resin, or a bisphenol A-type novolac resin; a resol-type phenol resin such as a methylol-type resol resin, a dimethylene ether-type resol resin, or an oil-melted resol phenol resin melted using tung oil, linseed oil, walnut oil, or the like; an arylalkylene-type phenol resin; and the like. One kind of these may be used singly, or two or more kinds thereof may be used in combination.

Among these, a novolac-type phenol resin is preferable because it is excellent in ease of availability, is inexpensive, and exhibits excellent workability at the time of roll kneading.

In a case where the novolac-type phenol resin is used as the phenol resin, generally, hexamethylenetetramine is used as a curing agent. The hexamethylenetetramine is not particularly limited, but the amount thereof used is preferably 10 parts by mass to 25 parts by mass, and more preferably 13 parts by mass to 20 parts by mass, with respect to 100 parts by mass of the novolac-type phenol resin. When the amount of the hexamethylenetetramine used is equal to or greater than the lower limit described above, the curing time at the time of molding can be shortened. When the amount of the hexamethylenetetramine used is equal to or less than the upper limit described above, the appearance of the molded article can be improved.

From the viewpoint of improving the mechanical strength of the resin member 101, the thermosetting resin composition (P) contains the filler (B). Here, in the present embodiment, a contraction inhibitor (D), which will be described later, is not included in the filler (B).

When the total solid content of the thermosetting resin composition (P) is 100% by mass, the content of the filler (B) is preferably equal to or greater than 40% by mass and equal to or less than 70% by mass, and more preferably equal to or greater than 45% by mass and equal to or less than 65% by mass. When the content of the filler (B) is within the above range, it is possible to improve the workability of the thermosetting resin composition (P) and to further improve the mechanical strength of the obtained resin member 101. As a result, it is possible to obtain the metal-resin composite body 100 in which the bond strength between the resin member 101 and the aluminum-based metal member 102 is further improved. Furthermore, by adjusting the type or content of the filler (B), the value of a coefficient of linear expansion $\alpha_R$ of the obtained resin member 101 can be adjusted.

Examples of the filler (B) include a fibrous filler, a granular filler, a plate-like filler, and the like. Herein, the fibrous filler is a filler having a fibrous shape. The plate-like filler is a filler having a plate-like shape. The granular filler is a filler whose shape is different from the shape of fibrous filler and plate-like filler including an irregular filler.

Examples of the fibrous filler include a fibrous inorganic filler such as glass fiber, carbon fiber, asbestos fiber, metal fiber, wollastonite, attapulgite, sepiolite, rock wool, aluminum borate whiskers, potassium titanate fiber, calcium carbonate whiskers, titanium oxide whiskers, or ceramic fiber; and a fibrous organic filler such as aramid fiber, polyimide fiber, and poly-p-phenylene benzobisoxazole fiber. One kind of these may be used singly, or two or more kinds thereof may be used in combination.

Examples of the plate-like filler and the granular filler include talc, kaolin clay, calcium carbonate, zinc oxide, calcium silicate hydrate, mica, glass flake, glass beads, magnesium carbonate, silica, titanium oxide, alumina, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, those obtained by pulverizing the above fibrous fillers, and the like. One kind of these may be used singly, or two or more kinds thereof may be used in combination.

The average particle size of the filler (B) in a weight-based particle size distribution by a laser diffraction and scattering-type particle size distribution analysis method is preferably equal to or greater than 0.1 $\mu$m. When the average particle size is equal to or greater than 0.1 $\mu$m, it is possible to improve the workability of the thermosetting resin composition (P) and to further improve the mechanical strength of the obtained resin member 101. The upper limit of the average particle size of the filler (B) is not particularly limited, but is equal to or less than 100 $\mu$m, for example.

It is more preferable that the thermosetting resin composition (P) contains, as the filler (B), a fibrous filler or a plate-like filler having an average major axis length of equal to or greater than 5 $\mu$m and equal to or less than 50 mm and an average aspect ratio of equal to or greater than 1 and equal to or less than 1,000.

The average major axis length and the average aspect ratio of the filler (B) can be measured using an SEM image as below. First, by using a scanning electron microscope, a plurality of fibrous fillers or plate-like fillers is imaged. From the images observed, 50 fibrous fillers or plate-like fillers are randomly selected, and a major axis length (fiber length in a case of fibrous filler or a major axis size in a plane direction in a case of plate-like filler) and a minor axis length (fiber diameter in a case of fibrous filler or the size in the thickness direction in a case of plate-like filler) of each of the fillers are measured. All of the major axes are added up and divided by 50, thereby obtaining the average major axis length. Similarly, all of the minor axes are added up and divided by 50, thereby obtaining the average minor axis length. Furthermore, a ratio of the average major axis length to the average minor axis length is determined as the average aspect ratio.

As the filler (B), one kind of filler or two or more kinds of filler which are selected from the group consisting of wollastonite, kaolin clay, talc, mica, glass beads, titanium oxide, alumina, silica, calcium carbonate, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, carbon fiber, and glass fiber are preferable, and one kind of filler or two or more kinds of filler which are selected from the group consisting of glass fiber, carbon fiber, glass beads, calcium carbonate, wollastonite, silica, and kaolin clay are more preferable. When the filler (B) described above is used, the mechanical strength of the resin member 101 can be particularly improved.

The surface of the filler (B) may be treated with a coupling agent such as a silane coupling agent (C) which will be described later.

The thermosetting resin composition (P) may further contain the silane coupling agent (C). When it contains the silane coupling agent (C), the adhesiveness with respect to the aluminum-based metal member 102 can be further improved. Furthermore, when the thermosetting resin composition (P) contains the silane coupling agent (C), the affinity between the thermosetting resin (A) and the filler (B) can be improved, and hence the mechanical strength of the resin member 101 can be further improved.

The content of the silane coupling agent (C) is not particularly limited because it depends on the specific surface area of the filler (B). However, the content of the silane coupling agent (C) is preferably equal to or greater than 0.01 parts by mass and equal to or less than 4.0 parts by mass, and more preferably equal to or greater than 0.1 parts by mass and equal to or less than 1.0 part by mass, with respect to 100 parts by mass of the filler (B). When the content of the silane coupling agent (C) is within the above range, it is possible to sufficiently coat the filler (B) and to further improve the mechanical strength of the resin member 101.

Examples of the silane coupling agent (C) include an epoxy group-containing alkoxysilane compound such as $\gamma$-glycidoxypropyl trimethoxysilane, $\gamma$-glycidoxypropyl triethoxysilane, or $\beta$-(3,4-epoxycyclohexyl)ethyl trimethoxysilane; a mercapto group-containing alkoxysilane compound such as $\gamma$-mercaptopropyl trimethoxysilane or $\gamma$-mercaptopropyl triethoxysilane; a ureido group-containing alkoxysilane compound such as $\gamma$-ureidopropyl triethoxysilane, $\gamma$-ureidopropyl trimethoxysilane, or $\gamma$-(2-ureidoethyl)aminopropyl trimethoxysilane; an isocyanato group-containing alkoxysilane compound such as $\gamma$-isocyanatopropyl triethoxysilane, $\gamma$-isocyanatopropyl trimethoxysilane, $\gamma$-isocyanatopropylmethyl dimethoxysilane, $\gamma$-isocyanatopropylmethyl diethoxysilane, $\gamma$-isocyanatopropylethyl dimethoxysilane, $\gamma$-isocyanatopropylethyl diethoxysilane, or $\gamma$-isocyanatopropyl trichlorosilane; an amino group-containing alkoxysilane compound such as $\gamma$-aminopropyl triethoxysilane, $\gamma$-(2-aminoethyl)aminopropylmethyl dimethoxysilane, $\gamma$-(2-aminoethyl)aminopropyl trimethoxysilane, or $\gamma$-aminopropyl trimethoxysilane; a hydroxyl group-containing alkoxysilane compound such as $\gamma$-hydroxypropyl trimethoxysilane or $\gamma$-hydroxypropyl triethoxysilane; and the like.

One kind of these may be used singly, or two or more kinds of these may be used in combination.

From the viewpoint of inhibiting the thermal contraction of the resin member 101, the thermosetting resin composition (P) preferably contains a contraction inhibitor (D). Here, in the present embodiment, the filler (B) described above is not included in the contraction inhibitor (D).

When the total solid content of the thermosetting resin composition (P) is 100% by mass, the content of the contraction inhibitor (D) is preferably equal to or greater than 0.5% by mass and equal to or less than 10% by mass, and more preferably equal to or greater than 1% by mass and equal to or less than 8% by mass. When the content of the contraction inhibitor (D) is equal to or less than the upper limit described above, the thermal expansion of the resin member 101 can be further inhibited. When the content of the contraction inhibitor (D) is equal to or greater than the lower limit described above, the thermal contraction of the resin member 101 can be further inhibited.

The contraction inhibitor (D) is not particularly limited as long as it has a great coefficient of thermal expansion and can inhibit the thermal contraction of the resin member 101. Examples of the contraction inhibitor (D) include elastomers such as acrylonitrile·butadiene rubber, unmodified polyvinyl acetate, polyvinyl acetate modified with carboxylic acid, polyvinyl butyral, natural rubber, isoprene rubber, styrene·butadiene rubber, butadiene rubber, chloroprene rubber, butyl rubber, ethylene·propylene rubber, acryl rubber, styrene·isoprene rubber, urethane rubber, silicon rubber, and fluorine rubber. One kind of these may be used singly, or two or more kinds thereof may be used in combination.

It is unclear why these compounds can inhibit contraction. However, presumably, that is because these compounds are incorporated into the cross-linking structure of the resin and inhibit contraction. Among the compounds, acrylonitrile·butadiene rubber, unmodified polyvinyl acetate, and polyvinyl acetate modified with carboxylic acid are preferable, and polyvinyl acetate modified with carboxylic acid is particularly preferable. It is considered that the polyvinyl acetate modified with carboxylic acid more strongly reflects the characteristics of polyvinyl acetate due to a reaction between a carboxyl group and the thermosetting resin (A) such as a phenol resin, and thus more strongly inhibits the thermal contraction of the resin member 101 compared to acrylonitrile·butadiene rubber, unmodified polyvinyl acetate, and the like.

The method for manufacturing the thermosetting resin composition (P) is not particularly limited. Generally, the composition can be manufactured by a known method. For example, the following method can be used. First, the thermosetting resin (A), the filler (B), the silane coupling agent (C) which is used if necessary, the contraction inhibitor (D), a curing agent, an auxiliary curing agent, a release agent, a pigment, a flame retardant, a weatherproofing agent, an antioxidant, a plasticizer, a lubricant, a sliding agent, a foaming agent, and the like are formulated and uniformly mixed together. Then, the obtained mixture is heated, melted, and kneaded by one of kneading devices such as a roll, a kneader, and a double-screw extruder or by a combination of a roll with other kneading devices. Finally, the obtained mixture is made into particles or pulverized, thereby obtaining the thermosetting resin composition (P).

The coefficient of linear expansion $\alpha_R$ of the resin member 101 within a range of 25°C to a glass transition temperature of the resin member 101 is preferably equal to or greater than 17 ppm/°C and equal to or less than 30 ppm/°C, and more preferably equal to or greater than 20 ppm/°C and equal to or less than 27 ppm/°C. When the coefficient of linear expansion $\alpha_R$ is within the above range, the reliability of temperature cycle of the metal-resin composite body 100 can be further improved.

In a case where the resin member 101 has a sheet shape, regarding the coefficient of linear expansion $\alpha_R$ of the resin member 101 within a range of 25°C to a glass transition temperature of the resin member 101, the absolute value of a difference ($\alpha_{R1}$ - $\alpha_{R2}$) between a coefficient of linear expansion $\alpha_{R1}$ in a flow direction (MD) and a coefficient of linear expansion $\alpha_{R2}$ in a direction (TD) perpendicular to MD is preferably equal to or less than 10 ppm/°C, and more preferably equal to or less than 8 ppm/°C. When the difference between the coefficients of linear expansion is equal to or less than the upper limit described above, distortion or warpage occurring in the resin member 101 can be reduced, and as a result, the dimensional stability of the obtained metal-resin composite body 100 at a high temperature can be further improved.

The thickness of the resin member 101 is not particularly limited because it is appropriately set according to the use of the metal-resin composite body 100. However, the thickness is generally equal to or greater than 0.05 mm, and preferably equal to or greater than 0.1 mm. The upper limit of the thickness of the resin member 101 is not particularly limited, but is equal to or less than 50 mm, for example.

<Metal-resin composite body>

Next, the metal-resin composite body 100 according to the present embodiment will be described.

The metal-resin composite body 100 includes the resin member 101 and the aluminum-based metal member 102 bonded to the resin member 101.

In the metal-resin composite body 100, the absolute value of a difference ($\alpha_R$ - $\alpha_M$) between a coefficient of linear expansion $\alpha_R$ of the resin member 101 within a range of 25°C to a glass transition temperature of the resin member 101 and a coefficient of linear expansion $\alpha_M$ of the aluminum-based metal member 102 within a range of 25°C to the glass transition temperature of the resin member 101 is preferably equal to or less than 15 ppm/°C, more preferably equal to or less than 10 ppm/°C, and even more preferably equal to or less than 5 ppm/°C. When the difference between the coefficients of linear expansion is equal to or less than the upper limit described above, it is possible to suppress the thermal stress which occurs due to the difference of linear expansion when the metal-resin composite body 100 is exposed to a high temperature. Therefore, as long as the difference between the coefficients of linear expansion is equal to or less than the upper limit described above, it is possible to maintain the bond strength between the resin member 101 and the aluminum-based metal member 102 even at a high temperature. That is, as long as the difference of the coefficient of linear expansion is equal to or less than the upper limit described above, it is possible to further improve the dimensional stability of the metal-resin composite body 100 at a high temperature.

In the present embodiment, in a case where the coefficients of linear expansion have anisotropy, the average thereof is indicated. For example, in a case where the resin member 101 has a sheet shape, when there is a difference between the coefficient of linear expansion in the flow direction (MD) and the coefficient of linear expansion in the direction (TD) perpendicular to MD, the average thereof is determined as the coefficient of linear expansion $\alpha_R$ of the resin member 101.

The metal-resin composite body 100 is not particularly limited, but is preferably a composite body in which the resin member 101 and the aluminum-based metal member 102 are directly bonded to each other without the aid of an adhesive. The resin member 101 and the aluminum-based metal member 102 have excellent bond strength even if an adhesive is not used. Therefore, the manufacturing process of the metal-resin composite body 100 can be simplified.

The adhesive refers to an adhesive known in the technical field of metal-resin composite body, and examples thereof include an epoxy-based adhesive and the like.

The total thickness of the metal-resin composite body 100 is not particularly limited because it is appropriately set according to the use of the metal-resin composite body 100. However, the total thickness is generally equal to or greater than 0.06 mm, and preferably equal to or greater than 0.2 mm. The upper limit of the thickness of the metal-resin composite body 100 is not particularly limited, but is equal to or less than 100 mm, for example.

<Method for manufacturing metal-resin composite body>

Next, the method for manufacturing the metal-resin composite body 100 will be described. The method for manufacturing the metal-resin composite body 100 is not particularly limited, and examples thereof include an injection molding method, a transfer molding method, a compression molding method, an injection and compression molding method, and the like. Among these, an injection molding method is particularly suitable.

The method for manufacturing the metal-resin composite body 100 includes the following steps, for example.

(1) A step of installing the aluminum-based metal member 102, which has the roughened layer 104 on at least the bonding surface 103 to be bonded to the resin member 101, in a mold 105.

(2) A step of bonding the resin member 101 composed of the thermosetting resin composition (P) to the aluminum-based metal member 102 by injecting the thermosetting resin composition (P) into the mold 105 and curing the thermosetting resin composition (P) in a state where at least a portion of the thermosetting resin composition (P) comes into contact with the bonding surface 103.

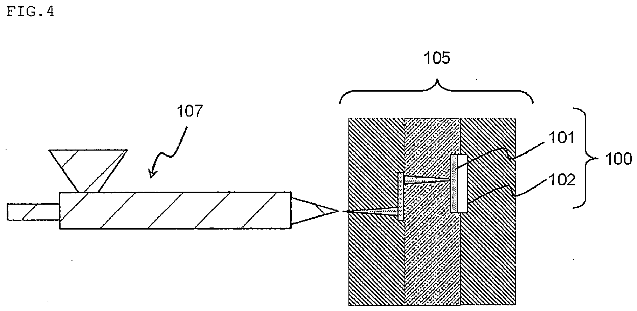

Hereinafter, regarding the method for manufacturing the metal-resin composite body 100, a case where an injection molding method is used will be described, for example. FIG. 4 is a sectional view schematically showing an example of a device for manufacturing the metal-resin composite body 100 according to an embodiment of the present invention.

First, the mold 105 is prepared, and the aluminum-based metal member 102 is installed in the mold 105. Then, by using an injection molding machine 107, the thermosetting resin composition (P) is injected into the mold 105, such that at least a portion of the thermosetting resin composition (P) comes into contact with the bonding surface 103 of the aluminum-based metal member 102. Thereafter, in a state where at least a portion of the thermosetting resin composition (P) comes into contact with the bonding surface 103, the thermosetting resin composition (P) is cured. Subsequently, the metal-resin composite body 100 is taken out of the mold 105, thereby obtaining the metal-resin composite body 100.

It is preferable that the thermosetting resin composition (P) has high fluidity such that molding is excellently performed. Therefore, a melt viscosity of the thermosetting resin composition (P) at 175°C is preferably equal to or greater than 10 Pa·s and equal to or less than 3,000 Pa·s, and more preferably equal to or greater than 30 Pa·s and equal to or less than 2,000 Pa·s. The melt viscosity at 175°C can be measured using a heat flow evaluator (flow tester) manufactured by Shimadzu Corporation, for example.

In the present embodiment, the molding conditions of the metal-resin composite body 100 are not particularly limited because they vary with the molding method employed. However, it is possible to employ the molding conditions that are generally known in regard to the molding method to be employed. In a case where an injection molding method is used as a molding method, for example, it is possible to employ the molding conditions of a temperature of 160°C to 180°C, a pressure of 10 MPa to 30 MPa, and a curing time of 30 seconds to 5 minutes.

(Use)

The metal-resin composite body 100 according to the present embodiment has high productivity, and the shape thereof can be extremely freely controlled. Therefore, the metal-resin composite body 100 is extremely versatile. For example, the metal-resin composite body 100 can be used for aircraft parts, automobile parts, parts for electronic instruments, parts for home appliances, parts for industrial machines, and the like. It is preferable that the metal-resin composite body 100 according to the present embodiment is used for automobile parts.

Hitherto, the embodiments of the present invention have been described. However, the embodiments are merely examples of the present invention, and various constituents other then the above can be employed.

[Example]

Hereinafter, the present embodiment will be specifically described with reference to examples and comparative examples, but the present embodiment is not limited to the description of the examples.

(Example 1)

<Preparation of thermosetting resin composition (P1)>

29.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 2.0% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P1).

(Viscosity characteristics of thermosetting resin composition (P1))

By using a heat flow characteristic evaluator (Koka-type flow tester, CFT-500D), a melt viscosity of the thermosetting resin composition (P1)at 175°C was measured.

<Surface treatment for aluminum-based metal member>

As an aluminum alloy sheet having not yet been subjected to surface treatment, an A5052 aluminum alloy sheet A (80 mm x 10 mm, thickness: 1.0 mm) whose surface was sufficiently polished with #4000 polishing paper was prepared.

An aqueous solution of potassium hydroxide (16% by mass), zinc chloride (5% by mass), sodium nitrate (5% by mass), and sodium thiosulfate (13% by mass) was prepared. The aluminum alloy sheet A was dipped into the obtained aqueous solution (30°C) and shaken, thereby dissolving the aluminum alloy sheet by 15 $\mu$m (calculated from the reduced weight of aluminum) in the depth direction. Then, the aluminum alloy sheet A was washed with water, dipped into 35% by mass of an aqueous nitric acid solution (30°C), and shaken for 20 seconds. Thereafter, the aluminum alloy sheet A was washed with water and dried, thereby obtaining an aluminum alloy sheet 1.

<Method for evaluating aluminum-based metal member>

(Measuring surface roughness of aluminum-based metal member)

By using a super-depth profile measuring microscope (VK9700 manufactured by KEYENCE CORPORATION), the surface shape of the bonding surface of the aluminum-based metal member that was bonded to the resin member was measured at 20x magnification. At this time, the surface roughness Ra and the maximum height Rz were measured based on JIS-B0601.

Ra and Rz of the aluminum alloy sheet 1 were 4.0 $\mu$m and 15.5 $\mu$m respectively.

(Measuring specific surface area)

The sample to be measured was dried in a vacuum for 6 hours at 120°C. Then, by using an automatic specific surface area/pore distribution analyzer (BELSORPmini II manufactured by BEL Japan, Inc.), the amount of nitrogen adsorbed onto and desorbed from the sample at the temperature of liquid nitrogen was measured. The actual surface area based on the nitrogen adsorption BET method was calculated from the BET plot. The actual surface area measured by the nitrogen adsorption BET method was divided by the apparent surface area, thereby calculating the specific surface area.

The specific surface area of the aluminum alloy sheet 1 was 270.

(Measuring degree of glossiness of surface of aluminum-based metal member)

The degree of glossiness of the surface of the aluminum-based metal member was measured based on ASTM-D523 at a measurement angle of 60° by using a digital gloss meter (20°, 60°) (GM-26 model, manufactured by MURAKAMI COLOR RESEARCH LABORATORY CO., Ltd.).

The degree of glossiness of the aluminum alloy sheet 1 was 10.

(Observing surface of aluminum-based metal member)

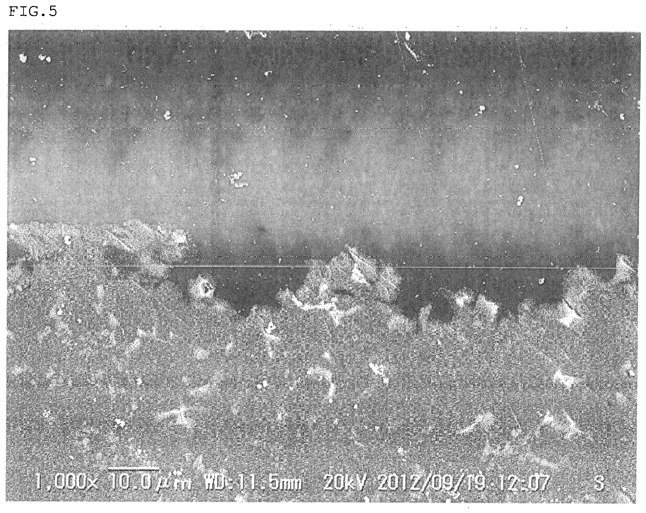

The surface of the aluminum-based metal member was imaged using an electron microscope (SEM), and the structure of the roughened layer present on the surface of the aluminum-based metal member was observed. FIG. 5 is an electron micrograph showing an enlarged view of the roughened layer present on the surface of the aluminum alloy sheet 1 obtained in Example 1. Through the observation, the thickness of the roughened layer, the sectional shape of the depression portion, the average depth of the depression portion, and the average section width of the opening portion were determined.

The thickness of the roughened layer of the aluminum alloy sheet 1 was 15 $\mu$m, the average depth of the depression portion was 13 $\mu$m, and the average section width of the opening portion was 14 $\mu$m. Furthermore, as shown in FIG. 5, the depression portion had such a sectional shape that, between the opening portion and the bottom portion of the depression portion, there is at least a portion whose section width is greater than the section width of the opening portion .

(Measuring coefficient of linear expansion $\alpha_M$)

By using a thermomechanical analyzer TMA (manufactured by TA Instruments., EXSTAR 6000), a coefficient of linear expansion $\alpha_M$ within a range of 25°C to the glass transition temperature of the resin member was measured under a compression condition of 5°C/min. The coefficient of linear expansion $\alpha_M$ of the aluminum alloy sheet 1 was 23 ppm/°C.

<Preparation of metal-resin composite body>

By using the obtained thermosetting resin composition (P1) and the aluminum alloy sheet 1, a metal-resin composite body 1 was prepared. Specifically, the composite body was prepared according to the following procedure.

First, the aluminum alloy sheet 1 having a thickness of 1 mm was disposed in a mold. Then, the thermosetting resin composition (P1) was heated such that the thickness thereof became 3 mm after curing, and the composition was injected in a predetermined amount into the mold. Finally, the thermosetting resin composition (P1) was cured by compression molding, thereby obtaining the metal-resin composite body 1 consisting of two layers composed of a resin member sheet having a thickness of 3 mm and the aluminum alloy sheet 1 having a thickness of 1 mm (length: 80 mm, width: 10 mm, thickness: 4 mm). The metal-resin composite body 1 was named a test piece 1. Herein, the compression molding was performed under the conditions of an effective pressure of 20 MPa, a mold temperature of 175°C, and a curing time of 3 minutes.

(Bending strength)

The bending strength of the obtained test piece 1 was measured in an atmosphere with a temperature of 25°C based on JIS K6911. At this time, the bending strength was tested in a state where the aluminum alloy sheet 1 was disposed at the lower side. Herein, the unit of the bending strength is "MPa".

(Measuring coefficient of linear expansion $\alpha_R$)

By using a thermomechanical analyzer TMA (manufactured by TA Instruments., EXSTAR 6000), a coefficient of linear expansion $\alpha_R$ of the resin member sheet within a range of 25°C to the glass transition temperature of the resin member sheet was measured under a compression conditions of 5°C/min. The coefficient of linear expansion $\alpha_R$ of the resin member sheet having a thickness of 3 mm composed of the thermosetting resin composition (P1) was 22 ppm/°C in the flow direction and 28 ppm/°C in a direction perpendicular to the flow direction. Furthermore, the average of the coefficient $\alpha_R$ was 25 ppm/°C. Therefore, a difference between the coefficients of linear expansion ($\alpha_R - \alpha_M$) was 2 ppm/°C.

(Rate of change of warpage of metal-resin composite body)

By using a temperature-variable three-dimensional laser measurement instrument (LS200-MT100MT50: manufactured by T Tech), a laser was vertically applied to the surface on the aluminum alloy sheet 1 side of the test piece 1 at 25°C, thereby performing measurement. A difference between a farthest point farthest away from a laser head and a closest point closest to the laser head was taken as a warpage amount. The number of samples was 5, and the average thereof was taken as the warpage amount.

Thereafter, the test piece 1 was stored for 250 hours at 150°C, and the warpage amount of the test piece 1 after the storage was measured in the same manner as described above.

Subsequently, the warpage amount before the storage was denoted by X1, the warpage amount after the storage was denoted by X2, and a rate of change of warpage was calculated by the following equation.

```
Rate of change of warpage [%] = (X2 - X1)/X1 x 100
```

(Example 2)

A metal-resin composite body 2 was prepared by the same method as in Example 1, except that the following thermosetting resin composition (P2) was used instead of the thermosetting resin composition (P1). The metal-resin composite body 2 was named a test piece 2 and evaluated in the same manner as in Example 1.

26.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 5.0% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P2).

(Example 3)

A metal-resin composite body 3 was prepared by the same method as in Example 1, except that the following thermosetting resin composition (P3) was used instead of the thermosetting resin composition (P1). The metal-resin composite body 3 was named a test piece 3 and evaluated in the same manner as in Example 1.

25.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 6.0% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name : KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P3).

(Example 4)

A metal-resin composite body 4 was prepared by the same method as in Example 1, except that the following thermosetting resin composition (P4) was used instead of the thermosetting resin composition (P1). The metal-resin composite body 4 was named a test piece 4 and evaluated in the same manner as in Example 1.

29.0% by mass of a novolac-type phenol resin (PR-51305, manufactured by Sumitomo Bakelite Co., Ltd.), 5.0% by mass of hexamethylenetetramine, 35.0% by mass of glass fiber (CS3E479, manufactured by Nitto Boseki Co., Ltd., average particle size: 11 $\mu$m, average major axis length: 3 mm, average aspect ratio: 270), 15.0% by mass of wollastonite (manufactured by NYCO Minerals, Inc., trade name: NYAD325, average particle size: 10 $\mu$m), 8.0% by mass of calcined clay (manufactured by FUJI TALC INDUSTRIAL CO., LTD., trade name: SP-33, average particle size: 2 $\mu$m), 5.0% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 1.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P4).

(Example 5)

A metal-resin composite body 5 was prepared by the same method as in Example 1, except that the following thermosetting resin composition (P5) was used instead of the thermosetting resin composition (P1). The metal-resin composite body 5 was named a test piece 5 and evaluated in the same manner as in Example 1.

26.0% by mass of a resol-type phenol resin (PR-513723, manufactured by Sumitomo Bakelite Co., Ltd.), 7.0% by mass of a novolac-type phenol resin (PR-51305, manufactured by Sumitomo Bakelite Co., Ltd.), 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 2.0% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name: KBE-903), 1.0% by mass of an auxiliary curing agent (slaked lime), and 3.5% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P5).

(Example 6)

A metal-resin composite body 6 was prepared by the same method as in Example 1, except that the following thermosetting resin composition (P6) was used instead of the thermosetting resin composition (P1). The metal-resin composite body 6 was named a test piece 6 and evaluated in the same manner as in Example 1.

29.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 2.0% by mass of polyvinyl acetate (manufactured by DENKI KAGAKU KOGYO KABUSHIKI KAISHA., trade name: SAKNOL SN-10), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P6).

(Example 7)

A metal-resin composite body 7 was prepared by the same method as in Example 1, except that the following thermosetting resin composition (P7) was used instead of the thermosetting resin composition (P1). The metal-resin composite body 7 was named a test piece 7 and evaluated in the same manner as in Example 1.

29.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 μm, average major axis length: 3 mm, average aspect ratio: 270), 26.0% by mass of wollastonite (manufactured by NYCO Minerals, Inc., trade name: NYAD325, average particle size: 10 μm), 17.0% by mass of molten silica (manufactured by Elkem, trade name: SIDISTAR, average particle size: 0.15 μm), 2.0% by mass of acrylonitrile·butadiene rubber (manufactured by JSR Corporation, PNC-38), 0.5% by mass of γ-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P7).

(Example 8)

A metal-resin composite body 8 was prepared by the same method as in Example 1, except that the following thermosetting resin composition (P8) was used instead of the thermosetting resin composition (P1). The metal-resin composite body 8 was named a test piece 8 and evaluated in the same manner as in Example 1.

29.0% by mass of a novolac-type phenol resin (PR-51305, manufactured by Sumitomo Bakelite Co., Ltd.), 5.0% by mass of hexamethylenetetramine, 60.0% by mass of glass fiber (CS3E479, manufactured by Nitto Boseki Co., Ltd., average particle size: 11 μm, average major axis length: 3 mm, average aspect ratio: 270), 2.0% by mass of polyvinyl acetate modified with carboxylic acid (manufactured by DENKI KAGAKU KOGYO KABUSHIKI KAISHA., trade name: DENKA ASR CH-09), 0.5% by mass of γ-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P8).

(Example 9)

A metal-resin composite body 9 was prepared by the same method as in Example 1, except that the following aluminum alloy sheet 2 was used instead of the aluminum alloy sheet 1. The metal-resin composite body 9 was named a test piece 9 and evaluated in the same manner as in Example 1.

An aqueous solution of potassium hydroxide (16% by mass), zinc chloride (5% by mass), sodium nitrate (5% by mass), and sodium thiosulfate (13% by mass) was prepared. The aluminum alloy sheet A was dipped into the obtained aqueous solution (30°C) and shaken, thereby dissolving the aluminum alloy sheet A by 30 μm (calculated from the reduced weight of aluminum) in the depth direction. Then, the aluminum alloy sheet A was washed with water, dipped into 35% by mass of an aqueous nitric acid solution (30°C), and shaken for 20 seconds. Thereafter, the aluminum alloy sheet A was washed with water and dried, thereby obtaining an aluminum alloy sheet 2.

The characteristics of the aluminum alloy sheet 2 were as follows.

Ra: 4.0 μm
Rz: 29.0 μm
Specific surface area: 290
Degree of glossiness: 9
Thickness of roughened layer: 30 μm
Average depth of depression portion: 28 μm
Average section width of opening portion: 5 μm
Coefficient of linear expansion $\alpha_M$: 23 ppm/°C

Furthermore, the depression portion had such a sectional shape that, between the opening portion and the bottom portion of the depression portion, there is at least a portion whose section width is greater than the section width of the opening portion.

(Example 10)

A metal-resin composite body 10 was prepared by the same method as in Example 1, except that the following aluminum alloy sheet 3 was used instead of the aluminum alloy sheet 1. The metal-resin composite body 10 was named a test piece 10 and evaluated in the same manner as in Example 1.

An aqueous solution of potassium hydroxide (16% by mass), zinc chloride (5% by mass), sodium nitrate (5% by mass), and sodium thiosulfate (13% by mass) was prepared. The aluminum alloy sheet A was dipped into the obtained aqueous solution (30°C) and shaken, thereby dissolving the aluminum alloy sheet A by 4 $\mu$m (calculated from the reduced weight of aluminum) in the depth direction. Then, the aluminum alloy sheet A was washed with water, dipped into 35% by mass of an aqueous nitric acid solution (30°C), and shaken for 20 seconds. Thereafter, the aluminum alloy sheet A was washed with water and dried, thereby obtaining an aluminum alloy sheet 3.

The characteristics of the aluminum alloy sheet 3 were as follows.

Ra: 1.0 $\mu$m
Rz: 4.0 $\mu$m
Specific surface area: 160
Degree of glossiness: 8
Thickness of roughened layer: 4 $\mu$m
Average depth of depression portion: 3.5 $\mu$m
Average section width of opening portion: 3 $\mu$m
Coefficient of linear expansion $\alpha_M$: 23 ppm/°C

Furthermore, the depression portion had such a sectional shape that, between the opening portion and the bottom portion of the depression portion, there is at least a portion whose section width is greater than the section width of the opening portion.

(Comparative example 1)

A metal-resin composite body 11 was prepared by the same method as in Example 1, except that the following thermosetting resin composition (P9) was used instead of the thermosetting resin composition (P1). The metal-resin composite body 11 was named a test piece 11 and evaluated in the same manner as in Example 1.

31.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P9).

(Comparative example 2)

A metal-resin composite body 12 was prepared by the same method as in Example 1, except that the following thermosetting resin composition (P10) was used instead of the thermosetting resin composition (P1). The metal-resin composite body 12 was named a test piece 12 and evaluated in the same manner as in Example 1.

30.0% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 $\mu$m, average major axis length: 3 mm, average aspect ratio: 270), 26.0% by mass of wollastonite (manufactured by NYCO Minerals, Inc., trade name: NYAD325, average particle size: 10 $\mu$m), 17.0% by mass of molten silica (manufactured by Elkem, trade name: SIDISTAR, average particle size: 0.15 $\mu$m), 0.5% by mass of polyvinyl acetate modified with carboxylic acid (manufactured by DENKI KAGAKU KOGYO KABUSHIKI KAISHA., trade name: DENKA ASR CH-09), 0.5% by mass of $\gamma$-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 3.4% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P10).

(Comparative example 3)

A metal-resin composite body 13 was prepared by the same method as in Example 1, except that the following thermosetting resin composition (P11) was used instead of the thermosetting resin composition (P1). The metal-resin composite body 13 was named a test piece 13 and evaluated in the same manner as in Example 1.
20.5% by mass of a novolac-type phenol resin (PR-51305, manufactured by Sumitomo Bakelite Co., Ltd.), 5.0% by mass of hexamethylenetetramine, 17.0% by mass of glass fiber (CS3E479, manufactured by Nitto Boseki Co., Ltd., average particle size: 11 μm, average major axis length: 3 mm, average aspect ratio: 270), 26.0% by mass of wollastonite (manufactured by NYCO Minerals, Inc., trade name: NYAD325, average particle size: 10 μm), 17.0% by mass of molten silica (manufactured by Elkem, trade name: SIDISTAR, average particle size: 0.15 μm), 10.5% by mass of polyvinyl acetate modified with carboxylic acid (manufactured by DENKI KAGAKU KOGYO KABUSHIKI KAISHA. , trade name: DENKA ASR CH-09), 0.5% by mass of γ-aminopropyl triethoxysilane (manufactured by Shin-Etsu Chemical Co., Ltd., trade name: KBE-903), 0.6% by mass of magnesium oxide (manufactured by Kyowa Chemical Industry Co., Ltd., trade name: KYOWAMAG 30), and 2.9% by mass of other components such as a lubricant were subjected to dry mixing. The mixture was subjected to melt kneading using a heating role with a temperature of 90°C such that the mixture is formed into a sheet, and the resultant was cooled and pulverized, thereby obtaining a granular thermosetting resin composition (P11).

(Evaluation of dimensional stability of housing using metal-resin composite body at high temperature)

Then, in the following manner, the dimensional stability of housings using the metal-resin composite bodies 1 to 13 obtained in examples and comparative examples at high temperature was evaluated.
First, by using the metal-resin composite bodies 1 to 13 prepared in examples and comparative examples, housings were prepared.
Thereafter, each of the obtained housings was stored for 250 hours in an environment of a temperature of 85°C and a humidity of 85%. Subsequently, each of the housings after storage was visually observed to see whether it had an abnormality.

A: No abnormality was observed in the bonding portion of the housing
B: A void was observed in the bonding portion of the housing.

The above evaluation results are shown in Tables 1 and 2.

[Table 1]

| | | Example 1 | Example 2 | Example 3 | Example 4 | Example 5 | Example 6 | Example 7 | Example 8 | Example 9 | Example 10 | Comparative example 1 | Comparative example 2 | Comparative example 3 |
|---|---|---|---|---|---|---|---|---|---|---|---|---|---|---|
| Thermosetting resin (A) | Novolac-type phenol resin | 29.0 | 26.0 | 25.0 | 29.0 | 7.0 | 29.0 | 29.0 | 29.0 | 29.0 | 29.0 | 31.0 | 30.0 | 20.5 |
| | Resol-type phenol resin | - | - | - | - | 26.0 | - | - | - | - | - | - | - | - |
| Filler (B) | Glass fiber | 17.0 | 17.0 | 17.0 | 35.0 | 17.0 | 17.0 | 17.0 | 60.0 | 17.0 | 17.0 | 17.0 | 17.0 | 17.0 |
| | Silica | 17.0 | 17.0 | 17.0 | - | 17.0 | 17.0 | 17.0 | - | 17.0 | 17.0 | 17.0 | 17.0 | 17.0 |
| | Wollastonite | 26.0 | 26.0 | 26.0 | 15.0 | 26.0 | 26.0 | 26.0 | - | 26.0 | 26.0 | 26.0 | 26.0 | 26.0 |
| | Clay | | | | 8.0 | | | | | | | | | |
| Silane coupling agent (C) | $\gamma$-Aminopropyl triethoxysilane | 0.5 | 0.5 | 0.5 | 0.5 | 0.5 | 0.5 | 0.5 | 0.5 | 0.5 | 0.5 | 0.5 | 0.5 | 0.5 |
| Contraction inhibitor (D) | Polyvinyl acetate modified with carboxylic acid | 2.0 | 5.0 | 6.0 | 5.0 | 2.0 | - | - | 2.0 | 2.0 | 2.0 | - | 0.5 | 10.5 |
| | Polyvinyl acetate | - | - | - | - | - | 2.0 | - | - | - | - | - | - | - |
| | Acrylonitrile·butadiene rubber | - | - | - | - | - | - | 2.0 | - | - | - | - | - | - |
| Curing agent | Hexamethylenetetramine | 5.0 | 5.0 | 5.0 | 5.0 | - | 5.0 | 5.0 | 5.0 | 5.0 | 5.0 | 5.0 | 5.0 | 5.0 |

(continued)

| | | Example 1 | Example 2 | Example 3 | Example 4 | Example 5 | Example 6 | Example 7 | Example 8 | Example 9 | Example 10 | Comparative example 1 | Comparative example 2 | Comparative example 3 |
|---|---|---|---|---|---|---|---|---|---|---|---|---|---|---|
| Auxiliary curing agent | Slaked lime | - | - | - | - | 1.0 | - | - | | - | - | - | - | - |
| | Magnesium oxide | 0.6 | 0.6 | 0.6 | 0.6 | - | 0.6 | 0.6 | 0.6 | 0.6 | 0.6 | 0.6 | 0.6 | 0.6 |
| Others | Lubricant and the like | 2.9 | 2.9 | 2.9 | 1.9 | 3.5 | 2.9 | 2.9 | 2.9 | 2.9 | 2.9 | 2.9 | 3.4 | 2.9 |
| Viscosity characteristics of thermosetting resin composition (P) | Melt viscosity at 175°C [Pa·s] | 425 | 435 | 440 | 445 | 425 | 425 | 425 | 430 | 425 | 425 | 415 | 415 | 440 |

[Table 2]

| | | Example 1 | Example 2 | Example 3 | Example 4 | Example 5 | Example 6 | Example 7 | Example 8 | Example 9 | Example 10 | Comparative example 1 | Comparative example 2 | Comparative example 3 |
|---|---|---|---|---|---|---|---|---|---|---|---|---|---|---|
| Coefficient expansion of resin member | TD direction [ppm/°C] | 28 | 27 | 27 | 29 | 28 | 29 | 28 | 29 | 28 | 28 | 27 | 27 | 25 |
| | MD direction [ppm/°C] | 22 | 22 | 23 | 22 | 22 | 22 | 23 | 19 | 22 | 22 | 22 | 22 | 20 |
| | Average [ppm/°C] | 25 | 25 | 25 | 26 | 25 | 26 | 26 | 24 | 25 | 25 | 25 | 25 | 24 |
| Difference between coefficients of linear expansion ($\alpha_R - \alpha_M$) [ppm/°C] | | 2 | 2 | 2 | 3 | 2 | 3 | 3 | 1 | 2 | 2 | 2 | 2 | 1 |
| Type of aluminum alloy sheet | | 1 | 1 | 1 | 1 | 1 | 1 | 1 | 1 | 2 | 3 | 1 | 1 | 1 |
| Characteristics of aluminum alloy sheet | Ra [μm] | 4.0 | 4.0 | 4.0 | 4.0 | 4.0 | 4.0 | 4.0 | 4.0 | 4.0 | 1.0 | 4.0 | 4.0 | 4.0 |
| | Rz [μm] | 15.5 | 15.5 | 15.5 | 15.5 | 15.5 | 15.5 | 15.5 | 15.5 | 29.0 | 4.0 | 15.5 | 15.5 | 15.5 |
| | Thickness of roughened layer [μm] | 15 | 15 | 15 | 15 | 15 | 15 | 15 | 15 | 30 | 4 | 15 | 15 | 15 |
| | Average depth of depression portion [μm] | 13 | 13 | 13 | 13 | 13 | 13 | 13 | 13 | 28 | 3.5 | 13 | 13 | 13 |
| | Average section width of opening portion [μm] | 14 | 14 | 14 | 14 | 14 | 14 | 14 | 14 | 5 | 3 | 14 | 14 | 14 |
| | Specific surface area [-] | 270 | 270 | 270 | 270 | 270 | 270 | 270 | 270 | 290 | 160 | 270 | 270 | 270 |
| | Degree of glossiness [-] | 10 | 10 | 10 | 10 | 10 | 10 | 10 | 10 | 9 | 8 | 10 | 10 | 10 |

| | | Example 1 | Example 2 | Example 3 | Example 4 | Example 5 | Example 6 | Example 7 | Example 8 | Example 9 | Example 10 | Comparative example 1 | Comparative example 2 | Comparative example 3 |
|---|---|---|---|---|---|---|---|---|---|---|---|---|---|---|
| Characteristics of metal-resin composite body | Warpage amount before storage [mm] | 0.40 | 0.24 | 0.12 | 0.25 | 0.38 | 0.39 | 0.43 | 0.41 | 0.40 | 0.39 | 0.48 | 0.49 | 0.30 |
| | Warpage amount after storage [mm] | 0.46 | 0.20 | 0.08 | 0.26 | 0.47 | 0.50 | 0.56 | 0.48 | 0.45 | 0.46 | 0.75 | 0.76 | 0.15 |
| | Rate of change of warpage % | 15 | -17 | -33 | 4 | 24 | 28 | 30 | 17 | 13 | 18 | 56 | 55 | -50 |
| | Bending strength [MPa] | 350 | 347 | 339 | 360 | 349 | 347 | 348 | 356 | 352 | 351 | 360 | 358 | 289 |
| Evaluation of metal-resin composite body | Dimensional stability at high temperarure | A | A | A | A | A | A | A | A | A | A | B | B | B |

EP 3 085 741 B1

In the metal-resin composite bodies 1 to 10 obtained in Examples 1 to 10, the rate of change of warpage was within a range of equal to or greater than -35% and equal to or less than 35%. Furthermore, the metal-resin composite bodies 1 to 10 had a sufficient bending strength. In all of the housings using the metal-resin composite bodies 1 to 10, an abnormality was not observed in the bonding portion, and the housings were excellent in the dimensional stability at a high temperature.

In contrast, in the metal-resin composite bodies 11 to 13 obtained in Comparative examples 1 to 3, the rate of change of warpage was outside the range of equal to or greater than -35% and equal to or less than 35%. In all of the housings using the metal-resin composite bodies 11 to 13, a void was observed in the bonding portion, and the housings exhibited poor dimensional stability at a high temperature.

**Claims**

1. A thermosetting resin composition for forming a resin member (101) in a metal-resin composite body (100) which includes the resin member (101) and an aluminum-based metal member (102) bonded to the resin member (101), the composition comprising:

    a thermosetting resin and a filler, **characterised by** that the thermosetting resin composition further comprises a contraction inhibitor, and that a rate of change of warpage calculated by the following steps 1 to 4 is equal to or greater than -35% and equal to or less than 35%:

    Step 1:
    By using a molding machine (107), the thermosetting resin composition is injection-molded in a mold (105), in which an aluminum alloy sheet having a thickness of 1 mm and a maximum height Rz of $15 \pm 1$ $\mu$m is disposed, under the conditions of an effective pressure of 20 MPa, a mold temperature of 175°C, and a curing time of 3 minutes, thereby preparing a sheet-like metal-resin composite body having a length of 80 mm, a width of 10 mm, and a thickness of 4 mm. Herein, Rz is measured based on JIS-B0601, and the resin member has a thickness of 3 mm.
    Step 2:
    The obtained sheet-like metal-resin composite body is stored for 250 hours at 150°C.
    Step 3:
    When the sheet-like metal-resin composite body (100) is measured using a temperature-variable three-dimensional laser measurement instrument by vertically applying a laser to the surface on the aluminum alloy sheet side of the sheet-like metal-resin composite body (100), a difference between a farthest point P1 farthest away from a laser head A and a closest point P2 closest to the laser head A is defined as a warpage amount X, the warpage amount before the storage is denoted by X1, and the warpage amount after the storage is denoted by X2.
    Step 4:
    A rate of change of warpage is calculated by the following equation.

    Rate of change of warpage [%] = (X2 - X1)/X1 x 100 Herein, in the sheet-like metal-resin composite body (100) after the storage, the resin member (101) composed of the thermosetting resin composition and the aluminum alloy sheet (102) remain bonded to each other, and
    wherein in the sheet-like metal-resin composite body (100), the absolute value of a difference $\alpha R - \alpha M$ between a coefficient of linear expansion $\alpha_R$ of the resin member (101) within a range of 25°C to a glass transition temperature of the resin member (101) and a coefficient of linear expansion $\alpha_M$ of the aluminum alloy sheet (102) within a range of 25°C to the glass transition temperature of the resin member (101) is equal to or less than 15 ppm/°C.

2. The thermosetting resin composition according to claim 1, wherein regarding the coefficient of linear expansion $\alpha_R$ of the resin member (101) in the sheet-like metal-resin composite body (100) within a range of 25°C to the glass transition temperature of the resin member (101), the absolute value of a difference $\alpha R1 - \alpha R2$ between a coefficient of linear expansion $\alpha_{R1}$ in a flow direction of the resin member (101) and a coefficient of linear expansion $\alpha_{R2}$ in a direction perpendicular to the flow direction is equal to or less than 10 ppm/°C.

3. The thermosetting resin composition according to claim 1, wherein the contraction inhibitor is one kind of compound or two or more kinds of compound selected from the group consisting of acrylonitrile ·butadiene rubber, unmodified polyvinyl acetate, and polyvinyl acetate modified with carboxylic acid.

**4.** The thermosetting resin composition according to claim 1 or 3,
wherein when the total solid content of the thermosetting resin composition is 100% by mass, the content of the contraction inhibitor is equal to or greater than 0.5% by mass and equal to or less than 10% by mass.

**5.** The thermosetting resin composition according to any one of claims 1 to 4,
wherein the filler is one kind of filler or two or more kinds of filler selected from the group consisting of wollastonite, kaolin clay, talc, mica, glass beads, titanium oxide, alumina, silica, calcium carbonate, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, carbon fiber, and glass fiber.

**6.** The thermosetting resin composition according to any one of claims 1 to 5,
wherein when the total solid content of the thermosetting resin composition is 100% by mass, the content of the filler is equal to or greater than 40% by mass and equal to or less than 70% by mass.

**7.** The thermosetting resin composition according to any one of claims 1 to 6,
wherein the thermosetting resin is a phenol resin.

**8.** The thermosetting resin composition according to claim 7, wherein the phenol resin is one kind of resin or two or more kinds of resin selected from the group consisting of a novolac-type phenol resin, a resol-type phenol resin, and an arylalkylene-type phenol resin.

**9.** A metal-resin composite body (100) comprising:

a resin member (101) composed of the thermosetting resin composition according to any one of claims 1 to 8; and an aluminum-based metal member (102) bonded to the resin member.

**10.** The metal-resin composite body (100) according to claim 9,
wherein the aluminum-based metal member (102) has a roughened layer (104) including fine irregularities on at least a bonding surface (103) to be bonded to the resin member (101).

**11.** The metal-resin composite body (100) according to claim 10,
wherein a depression portion (201) constituting the irregularities has such a sectional shape that, between an opening portion (203) and a bottom portion (205) of the depression portion (201), there is at least a portion whose section width is greater than a section width of the opening portion (203).

**12.** The metal-resin composite body (100) according to claim 10 or 11,
wherein the thickness of the roughened layer (104) is within a range of equal to or greater than 3 $\mu$m and equal to or less than 40 $\mu$m.

**13.** The metal-resin composite body (100) according to any one of claims 9 to 12, that is obtained by curing the thermosetting resin composition in a state where at least a portion of the thermosetting resin composition comes into contact with the bonding surface of the aluminum-based metal member (102), by using a molding method selected from an injection molding method, a transfer molding method, a compression molding method, and an injection and compression molding method.


**Patentansprüche**

**1.** Wärmehärtende Harzzusammensetzung zum Ausbilden eines Harzelements (101) in einem Metall-Harz-Verbundstoff-Körper (100), der das Harzelement (101) und ein aluminiumbasiertes Metallelement (102), das mit dem Harzelement (101) verbunden ist, enthält, wobei die Zusammensetzung umfasst:

ein wärmehärtendes Harz und einen Füllstoff, **dadurch gekennzeichnet, dass** die wärmehärtende Harzzusammensetzung ferner einen Schrumpfungshemmer umfasst und dass ein Wölbungsänderungsmaß, berechnet mittels der folgenden Schritte 1 bis 4, gleich oder größer als -35 % und gleich oder kleiner als 35 % ist:

Schritt 1:
Unter Benutzung einer Formmaschine (107) wird die wärmehärtende Harzzusammensetzung unter den Bedingungen eines effektiven Drucks von 20 MPa, einer Formtemperatur von 175 °C und einer Aushärtungszeit von 3 Minuten in eine Form (105) spritzgegossen, in der ein Aluminiumlegierungsblech mit einer Dicke von 1 mm und einer maximalen Höhe Rz von 15 ± 1 μm angeordnet ist, und dadurch ein flächiger Metall-Harz-Verbundstoff-Körper hergestellt, der eine Länge von 80 mm, eine Breite von 10 mm und eine Dicke von 4 mm aufweist. Hierbei wird Rz basierend auf JIS-B0601 gemessen, und das Harzelement weist eine Dicke von 3 mm auf.

Schritt 2:

Der erhaltene flächige Metall-Harz-Verbundstoff-Körper wird 250 Stunden bei 150 °C gelagert.

Schritt 3:

Wenn der flächige Metall-Harz-Verbundstoff-Körper (100) unter Benutzung eines temperaturvariablen Instruments zur dreidimensionalen Lasermessung vermessen wird, indem ein Laser vertikal an die Oberfläche auf der Aluminiumlegierungsblechseite des flächigen Metall-Harz-Verbundstoff-Körpers (100) angelegt wird, wird eine Differenz zwischen einem entferntesten Punkt P1, der am weitesten von einem Laserkopf A entfernt ist, und einem nächsten Punkt P2, der dem Laserkopf A am nächsten ist, als ein Wölbungswert X definiert, der Wölbungswert vor der Lagerung mit X1 bezeichnet und der Wölbungswert nach der Lagerung mit X2 bezeichnet.

Schritt 4:

Ein Wölbungsänderungsmaß wird mittels der folgenden Gleichung berechnet.

Wölbungsänderungsmaß [%] = (X2 - X1)/X1 x 100 Hierbei bleiben in dem flächigen Metall-Harz-Verbundstoff-Körper (100) nach der Lagerung das Harzelement (101), das aus der wärmehärtenden Harzzusammensetzung und dem Aluminiumlegierungsblech (102) zusammengesetzt ist, miteinander verbunden, und wobei in dem flächigen Metall-Harz-Verbundstoff-Körper (100) der Absolutwert einer Differenz $\alpha_R - \alpha M$ zwischen einem linearen Ausdehnungskoeffizienten $\alpha_R$ des Harzelements (101) innerhalb eines Bereichs von 25 °C zu einer Glasübergangstemperatur des Harzelements (101) und einem linearen Ausdehnungskoeffizienten $\alpha_M$ des Aluminiumlegierungsblechs (102) innerhalb eines Bereichs von 25 °C zu der Glasübergangstemperatur des Harzelements (101) gleich oder kleiner als 15 ppm/°C ist.

2. Wärmehärtende Harzzusammensetzung nach Anspruch 1, wobei bezüglich des linearen Ausdehnungskoeffizienten $\alpha_R$ des Harzelements (101) in dem flächigen Metall-Harz-Verbundstoff-Körper (100) innerhalb eines Bereichs von 25 °C zu der Glasübergangstemperatur des Harzelements (101) der Absolutwert einer Differenz $\alpha R1 - \alpha R2$ zwischen einem linearen Ausdehnungskoeffizienten $\alpha_{R1}$ in einer Fließrichtung des Harzelements (101) und einem linearen Ausdehnungskoeffizienten $\alpha_{R2}$ in einer Richtung rechtwinklig zu der Fließrichtung gleich oder kleiner als 10 ppm/°C ist.

3. Wärmehärtende Harzzusammensetzung nach Anspruch 1, wobei es sich bei dem Schrumpfungshemmer um eine Art von Verbindung oder zwei oder mehr Arten von Verbindung handelt, die aus der Gruppe bestehend aus Acrylnitril-Butadien-Kautschuk, nicht modifiziertem Polyvinylacetat und Polyvinylacetat, das mit Carbonsäure modifiziert wurde, ausgewählt ist/sind.

4. Wärmehärtende Harzzusammensetzung nach Anspruch 1 oder 3,
wobei, wenn der Gesamtfeststoffgehalt der wärmehärtenden Harzzusammensetzung 100 Masse% beträgt, der Gehalt des Schrumpfungshemmers gleich oder größer als 0,5 Masse% und gleich oder kleiner als 10 Masse% ist.

5. Wärmehärtende Harzzusammensetzung nach einem der Ansprüche 1 bis 4,
wobei es sich bei dem Füllstoff um eine Art von Füllstoff oder zwei oder mehr Arten von Füllstoff handelt, die aus der Gruppe bestehend aus Wollastonit, Schlämmkaolin, Talkum, Glimmer, Glaskügelchen, Titanoxid, Aluminiumoxid, Siliciumdioxid, Calciumcarbonat, Aluminiumhydroxid, Magnesiumhydroxid, Bariumsulfat, Calciumsulfat, Calciumsulfit, Zinkborat, Bariummetaborat, Aluminiumborat, Calciumborat, Natriumborat, Aluminiumnitrid, Bornitrid, Siliciumnitrid, Kohlenstofffaser und Glasfaser ausgewählt ist/sind.

6. Wärmehärtende Harzzusammensetzung nach einem der Ansprüche 1 bis 5,
wobei, wenn der Gesamtfeststoffgehalt der wärmehärtenden Harzzusammensetzung 100 Masse% beträgt, der Gehalt des Füllstoffes gleich oder größer als 40 Masse% und gleich oder kleiner als 70 Masse% ist.

7. Wärmehärtende Harzzusammensetzung nach einem der Ansprüche 1 bis 6,
wobei das wärmehärtende Harz ein Phenolharz ist.

8. Wärmehärtende Harzzusammensetzung nach Anspruch 7, wobei es sich bei dem Phenolharz um eine Art von Harz oder zwei oder mehr Arten von Harz handelt, die aus der Gruppe bestehend aus einem Phenolharz vom Novolac-Typ, einem Phenolharz vom Resol-Typ und einem Phenolharz vom Arylalkylen-Typ ausgewählt ist/sind.

9. Metall-Harz-Verbundstoff-Körper (100), umfassend:

ein Harzelement (101), das aus der wärmehärtenden Harzzusammensetzung nach einem der Ansprüche 1 bis 8 zusammengesetzt ist; und
ein aluminiumbasiertes Metallelement (102), das mit dem Harzelement verbunden ist.

10. Metall-Harz-Verbundstoff-Körper (100) nach Anspruch 9, wobei das aluminiumbasierte Metallelement (102) wenigstens auf einer Verbindungsfläche (103), die mit dem Harzelement (101) zu verbinden ist, eine aufgeraute Schicht (104) aufweist, die feine Unregelmäßigkeiten enthält.

11. Metall-Harz-Verbundstoff-Körper (100) nach Anspruch 10,
wobei ein Vertiefungsabschnitt (201), der die Unregelmäßigkeiten darstellt, eine derartige Querschnittsform aufweist, dass zwischen einem Öffnungsabschnitt (203) und einem Bodenabschnitt (205) des Vertiefungsabschnitts (201) wenigstens ein Abschnitt vorhanden ist, dessen Querschnittsbreite größer ist als eine Querschnittsbreite des Öffnungsabschnitts (203).

12. Metall-Harz-Verbundstoff-Körper (100) nach Anspruch 10 oder 11,
wobei die Dicke der aufgerauten Schicht (104) innerhalb eines Bereichs von gleich oder größer als 3 $\mu$m und gleich oder kleiner als 40 $\mu$m liegt.

13. Metall-Harz-Verbundstoff-Körper (100) nach einem der Ansprüche 9 bis 12, der durch Aushärten der wärmehärtenden Harzzusammensetzung in einem Zustand, in dem wenigstens ein Abschnitt der wärmehärtenden Harzzusammensetzung in Kontakt mit der Verbindungsfläche des aluminiumbasierten Metallelements (102) kommt, unter Benutzung eines Formverfahrens, ausgewählt aus einem Spritzgießverfahren, einem Spritzpressverfahren, einem Formpressverfahren und einem Spritzgieß- und Formpressverfahren, erhalten wird.

**Revendications**

1. Une composition de résine thermodurcissable pour former un élément de résine (101) dans un corps composite de résine-métal (100) qui comprend l'élément de résine (101) et un élément métallique à base d'aluminium (102) lié à l'élément de résine (101), la composition comprenant:

une résine thermodurcissable et une charge, **caractérisé en ce que** la composition de résine thermodurcissable en outre comprend un inhibiteur de contraction et que le taux de changement de gauchissement calculé par les suivantes étapes 1 à 4 est égal ou supérieur à -35% et égal ou inférieur à 35% :

Étape 1 :
en utilisant une machine de moulage (107), la composition de résine thermodurcissable est moulé par injection dans un moule (105), dans lequel une feuille d'alliage d'aluminium ayant une épaisseur de 1 mm et une hauteur maximale Rz de 15 $\pm$ 1 $\mu$m $\mu$m est disposé, dans les conditions d'une pression effective de 20 MPa, d'une température de moule de 175 °C, et d'un temps de durcissement de 3 minutes, ainsi préparant un corps composite de résine-métal ressemblant à une feuille ayant une longueur de 80 mm, une largeur de 10 mm et une épaisseur de 4 mm. Là-dedans, Rz est mesuré à base de JIS-B0601, et l'élément de résine à une épaisseur de 3 mm.
Étape 2 :
le corps composite de résine-métal ressemblant à une feuille obtenu est stocké à 150 °C durant 250 heures.
Étape 3 :
quand le corps composite de résine-métal (100) est mesuré en utilisant un instrument de mesure à laser tridimensionnel à température variable en appliquant verticalement un laser sur la surface du côté de la feuille d'alliage d'aluminium du corps composite de résine-métal (100) ressemblant à une feuille, une différence entre un point P1 le plus éloigné d'une tête laser A et un point P2 le plus proche de la tête laser A est défini comme une quantité de gauchissement X, la quantité de gauchissement avant le stockage est notée X1, et la quantité de gauchissement après le stockage est notée X2.

Étape 4 :
un taux de changement de gauchissement est calculé par le moyen de l'équation suivante.

Taux de changement de gauchissement [%] = (X2 - X1) / X1 x 100

Là-dedans, dans le corps composite de résine-métal (100) ressemblant à une feuille après le stockage, de l'élément de résine (101) composé de la composition de résine thermodurcissable et de la feuille d'alliage d'aluminium (102) restent lié l'un à l'autre, et

dans laquelle, dans le corps composite de résine-métal (100) ressemblant à une feuille la valeur absolue d'une différence αR - αM entre un coefficient de dilatation linéaire αR de l'élément de résine (101) dans une plage de 25 °C à une température de transition vitreuse de l'élément de résine (101) et un coefficient de dilatation linéaire αM de la feuille d'alliage d'aluminium (102) dans une plage de 25° à la température de transition vitreuse de l'élément de résine (101) est égale ou inférieure à 15.

2. La composition de résine thermodurcissable selon la revendication 1, dans laquelle concernant le coefficient de dilatation linéaire αR de l'élément de résine (101) dans le corps composite de résine-métal (100) dans une plage de 25° à la température de transition vitreuse de l'élément de résine (101), la valeur absolue d'une différence αR1 - αR2 entre un coefficient de dilatation linéaire αR1 dans une direction d'écoulement de l'élément de résine (101) et un coefficient de dilatation linéaire αR2 dans une direction perpendiculaire à la direction d'écoulement est égale ou inférieure à 10 ppm / °C.

3. La composition de résine thermodurcissable selon la revendication 1, dans laquelle l'inhibiteur de contraction est un type de composé ou deux ou plusieurs types de composés choisis parmi le groupe constitué par le caoutchouc acrylonitrile-butadiène, le polyvinylacétate non modifié et le polyvinylacétate modifié par l'acide carboxylique.

4. La composition de résine thermodurcissable selon la revendication 1 ou 3, dans laquelle lorsque la teneur totale en solides de la composition de résine thermodurcissable est de 100% en masse, la teneur en inhibiteur de contraction est égale ou supérieure à 0,5% en masse et égale ou inférieure à 10% en masse.

5. La composition de résine thermodurcissable selon l'une quelconque des revendications 1 à 4, dans laquelle la charge est une sorte de charge ou deux ou plusieurs types de charge choisis parmi le groupe constitué par la wollastonite, l'argile de kaolin, le talc, le mica, les billes de verre, l'oxyde de titane, l'alumine, la silice, le carbonate de calcium, l'hydroxyde d'aluminium, l'hydroxyde de magnésium, le sulfate de baryum, le sulfate de calcium, le sulfite de calcium, le borate de zinc, le métaborate de baryum, le borate d'aluminium, le borate de calcium, le borate de sodium, le nitrure d'aluminium, le nitrure de bore, le nitrure de silicium les fibres de verre.

6. La composition de résine thermodurcissable selon l'une quelconque des revendications 1 à 5, dans laquelle lorsque la teneur totale en solides de la composition de résine thermodurcissable est de 100% en masse, la teneur en charge est égale ou supérieure à 40% en masse et inférieure à 70% en masse.

7. La composition de résine thermodurcissable selon l'une quelconque des revendications 1 à 6, dans laquelle la résine thermodurcissable est une résine de phénol.

8. Composition de résine thermodurcissable selon la revendication 7, dans laquelle la résine de phénol est un type de résine ou deux ou plusieurs types de résine choisis parmi le groupe constitué d'une résine de phénol de type novolaque, d'une résine de phénol de type résol et d'une résine de phénol d'un type arylalkylène.

9. Un corps composite de résine-métal (100) comprenant:

un élément de résine (101) composé de la composition de résine thermodurcissable selon l'une quelconque des revendications 1 à 8; et
un élément métallique à base d'aluminium (102) lié à l'élément de résine.

10. Le corps composite de résine-métal (100) selon la revendication 9, dans lequel l'élément métallique à base d'aluminium (102) a une couche rendue rugueuse (104) comprenant de fines irrégularités sur au moins une surface de liaison (103) devant être liée à l'élément en résine (101).

11. Le corps composite de résine-métal (100) selon la revendication 10,

dans lequel une partie en creux (201) constituant les irrégularités a une section telle qu'entre une partie d'ouverture (203) et une partie inférieure (205) de la partie en creux (201),
il y a au moins une partie dont la largeur de section est supérieure à une largeur de section de la partie d'ouverture (203).

**12.** Le corps composite de résine-métal (100) selon la revendication 10 ou 11,
dans lequel l'épaisseur de la couche rendue rugueuse (104) est comprise dans une plage égale ou supérieure à 3 $\mu$m et égale ou inférieure à 40 $\mu$m.

**13.** Le corps composite de résine-métal (100) selon l'une quelconque des revendications 9 à 12, qui est obtenu en durcissant la composition de résine thermodurcissable dans un état où au moins une partie de la composition de résine thermodurcissable entre en contact avec la surface de liaison de l'élément à base d'aluminium (102), en utilisant un procédé de moulage choisi parmi un procédé de moulage par injection, un procédé de moulage par transfert, un procédé de moulage par compression, et un procédé de moulage par injection et par compression.

FIG.1

FIG.2

FIG.3

FIG.4

FIG.5

1,000× 10.0 μm WD.11.5mm 20kV 2012/09/19 12:07 S

**EP 3 085 741 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010274600 A
- JP 2012116126 A
- EP 2910372 A1
- JP H0912840 A